# FASCICULE DE BREVET EUROPEEN

(11) **EP 1 537 330 B1**
(45) Date de publication et mention de la délivrance du brevet: **28.06.2006**
(21) Numéro de dépôt: 03795047.4
(22) Date de dépôt: 12.09.2003
(51) Int. Cl.: F03B 3/02, F03B 3/12

(54) **ROUE DE TYPE FRANCIS**
FRANCIS-RAD UND SOLCH EIN RAD UMFASSENDE HYDRAULISCHE MASCHINE
FRANCIS WHEEL AND HYDRAULIC MACHINE COMPRISING ONE SUCH WHEEL

(30) Priorité: 13.09.2002 FR 0211382
(43) Date de publication de la demande: 08.06.2005
(73) Titulaire: Alstom Technology Ltd, 5400 Baden (CH)
(72) Inventeur: PAQUET, François, F-38800 Champagnier (FR); MICHEL, Bernard, F-38410 Vaulnaveys le Bas (FR)
(74) Mandataire: Myon, Gérard Jean-Pierre
(86) Numéro de dépôt international: PCT/FR2003/002707
(87) Numéro de publication internationale: WO 2004/025116

(56) Documents cités:
- DE-C- 281 316
- US-A- 1 929 098
- PATENT ABSTRACTS OF JAPAN vol. 0102, no. 81 (M-520), 25 septembre 1986 (1986-09-25) & JP 61 101680 A (TOSHIBA CORP), 20 mai 1986 (1986-05-20)
- BREKKE H: "WHY NOT MAKE THE TURBINES CAVITATION FREE?" PROCEEDINGS OF THE INTERNATIONAL CONFERENCE ON HYDROPOWER - WATERPOWER, XX, XX, vol. 3, no. 3, PART 3, 5 août 1997 (1997-08-05), pages 1925-1934, XP008017906

## Description

L'invention a trait à une roue de type Francis et à une machine hydraulique équipée d'une telle roue.

Les roues de type Francis peuvent équiper différentes sortes de machines hydrauliques, telles que des turbines, des pompes ou des turbines-pompes. Elles comprennent des aubes réparties autour d'un arbre central de rotation et définissent entre elles des conduits d'écoulement d'eau. Comme mentionné dans l'article de H. BREKKE intitulé « Why not make the turbine cavitation free » et publié dans « Proceedings of the International Conference on Hydropower » - Waterpower, XX, XX, vol. 3, no. 3, Part 3 (5 août 1997) et comme envisagé dans JP-A-61 101680, il a parfois été envisagé de faire varier des angles de fuite d'aubes de roues Francis pour en améliorer le fonctionnement. La géométrie des aubes de ces roues est définie pour que l'écoulement de l'eau induise un couple de rotation sur la roue, dans le cas d'une turbine, ou pour transmettre un mouvement au fluide, dans le cas d'une pompe. La puissance que peut délivrer une machine hydraulique équipée d'une telle roue dépend de sa géométrie et du type de chutes auquel elle est associée. Ainsi, la puissance que peut délivrer une turbine peut être ramenée à une valeur de référence définie par la puissance équivalente délivrée par une turbine de même géométrie travaillant sous 1 mètre de chute et dont le diamètre de sortie de roue est de 1 mètre. Cette puissance P₁₁ dépend en particulier de la vitesse de rotation N₁₁ de la turbine dans les mêmes conditions.

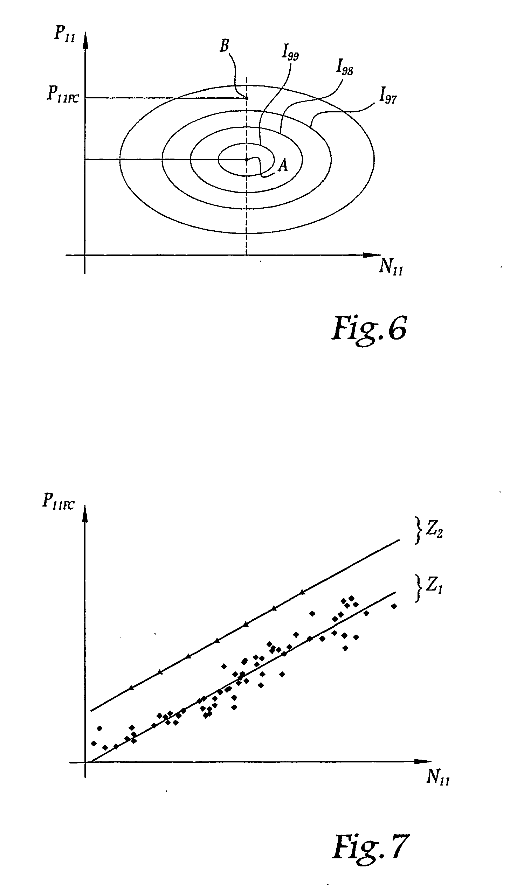

Comme il ressort de la figure 6, un point de fonctionnement optimal A peut être défini dans un système d'axes donnant la puissance P₁₁ d'une turbine, dans les conditions sus-mentionnées, en fonction de la vitesse de rotation N₁₁ dans les mêmes conditions. On définit comme puissance sous forte charge P_{11FC}, la puissance de la turbine pour un rendement inférieur de 3,5% au rendement au point A. Dans le repère P₁₁ sur N₁₁, on définit des courbes I₉₉, I₉₈, I₉₇, etc ... d'isovaleurs du rendement obtenu avec une turbine. On définit par ailleurs un point remarquable B de même abscisse que le point A et pour lequel la puissance obtenue est égale à P_{11FC}.

On définit comme la puissance équivalente sous forte charge P_{11FC} la puissance obtenue dans les conditions du point B pour chaque turbine.

Comme représenté à la figure 7, les turbines actuelles ont des puissances équivalentes sous fortes charges P_{11FC} qui, dans une représentation en fonction de la vitesse N₁₁ mentionnée ci-dessus, se trouvent dans une première zone Z₁, ce qui montre que la puissance équivalente sous forte charge Pure augmente en fonction de la vitesse N₁₁. Il est parfois nécessaire d'obtenir des puissances équivalentes sous fortes charges relativement élevées. En particulier, en cas de réhabilitation d'une installation existante, la vitesse N₁₁ est imposée, ce qui limite en pratique les valeurs de puissance P_{11FC} pouvant être obtenues avec une turbine classique.

Jusqu'à présent, des zones de puissance équivalentes sous fortes charges de valeurs relativement élevées par rapport à la vitesse N₁₁ n'ont pas été réellement explorées par les concepteurs de machines hydrauliques, car on s'attendait à des solutions dégradées sur le plan technico-économique.

La présente invention prend le contre-pied de ce préjugé de l'homme du métier en explorant les plages de valeurs de débits, de puissances et de vitesses des machines hydrauliques correspondant approximativement à la zone Z₂ à la figure 7. Il s'est avéré qu'un choix judicieux de certaines caractéristiques de la roue de turbine permet d'obtenir des solutions offrant un meilleur niveau de rendement, ainsi que cela ressort des explications qui suivent.

Dans cet esprit, l'invention concerne une roue de type Francis qui comprend un plafond, une ceinture et des aubes s'étendant entre ce plafond et cette ceinture, ces aubes définissant entre elles des conduits d'écoulement de liquide. Cette roue est caractérisée en ce que l'angle entre la vitesse linéaire de progression d'une des aubes et la médiane de cette aube au niveau de son bord de fuite a, au voisinage du point d'attache de l'aube sur la ceinture, une valeur comprise entre 20 et 25°.

Grâce à l'invention, l'orientation du bord de fuite des aubes par rapport à leur direction de progression linéaire est suffisamment importante pour qu'un débit de liquide important puisse transiter par la roue, ce qui permet d'atteindre des valeurs de puissance notablement plus élevées que celles connues des machines de l'état de la technique, sans dégrader le rendement de la machine.

Selon des aspects avantageux mais non obligatoires de l'invention, cette roue incorpore une ou plusieurs des caractéristiques suivantes :
- Sur la longueur du bord de fuite de l'aube, l'angle entre la vitesse linéaire et la médiane précitée a une valeur maximale inférieure à 34°.
- Sur la longueur du bord de fuite de l'aube, l'angle entre la vitesse linéaire et la médiane précitée a une valeur moyenne comprise entre 20 et 30°.
- Sur la longueur du bord d'attaque de l'aube, l'angle moyen entre la vitesse linéaire et la médiane de cette aube au niveau du bord d'attaque a une valeur comprise entre 70 et 120°.
- L'angle entre la vitesse linéaire et la médiane précitée a, au voisinage du point d'attache de l'aube sur la ceinture, une valeur comprise entre 70 et 120°.
- L'angle de recouvrement entre le bord d'attaque et le bord de fuite de l'aube a, en vue selon une direction parallèle à l'axe de rotation de la roue
   - au niveau de la ceinture, une valeur inférieure à 25° ;
   - au niveau du plafond, une valeur inférieure à 37° et
   - en moyenne, sur la longueur des bords d'attaque et de fuite, une valeur inférieure à 31°.
- La ceinture a une section méridienne telle que son diamètre minimal sur le tiers central de sa hauteur est inférieur d'au moins 2% par rapport au diamètre de la ceinture au niveau des points d'attache des bords de fuite des aubes précitées.

L'invention concerne également une machine hydraulique de type Francis qui comprend une roue telle que précédemment décrite. Une telle machine peut être constituée par une turbine apte à délivrer une puissance équivalente sous fortes charges, sous 1 mètre de chute et avec un diamètre de sortie de roue de 1 mètre, exprimée en kilowatts, telle que son rapport avec la vitesse de rotation de la turbine dans les même conditions, exprimée en tours/minute, à une valeur comprise entre 0,16 et 0,175. De façon surprenante, une telle machine a un rendement satisfaisant, aux plages de N₁₁ habituellement utilisées.

L'invention sera mieux comprise et d'autres avantages de celle-ci apparaîtront plus clairement à la lumière de la description qui va suivre d'un mode de réalisation d'une turbine Francis conforme à l'invention, donnée uniquement à titre d'exemple et faite en référence aux dessins annexés dans lesquels :
- la figure 1 est une vue en perspective d'une roue de turbine Francis conforme à l'invention ;
- la figure 2 est une demi-coupe méridienne de la roue de la figure 1 ;
- la figure 3 est une coupe développée du profil de l'aube représentée à la figure 2 le long de la ligne III;
- la figure 4 est une coupe analogue à la figure 3 dans la zone de liaison entre l'aube et la ceinture, le long de la ligne IV à la figure 2 ;
- la figure 5 est une vue de dessus de l'aube représentée aux figures 2 à 4, le plafond et la ceinture étant omis pour la clarté des dessins ;
- la figure 6 est une représentation schématique de principe des courbes d'iso-rendement en fonction de la puissance équivalente d'une turbine et de la vitesse de rotation dans les conditions mentionnées ci-dessus et
- la figure 7 est une représentation de principe de la répartition des puissances équivalentes sous forte charge (P_{11FC}) de différentes turbines en fonction de leurs vitesses de rotation dans les conditions précitées.

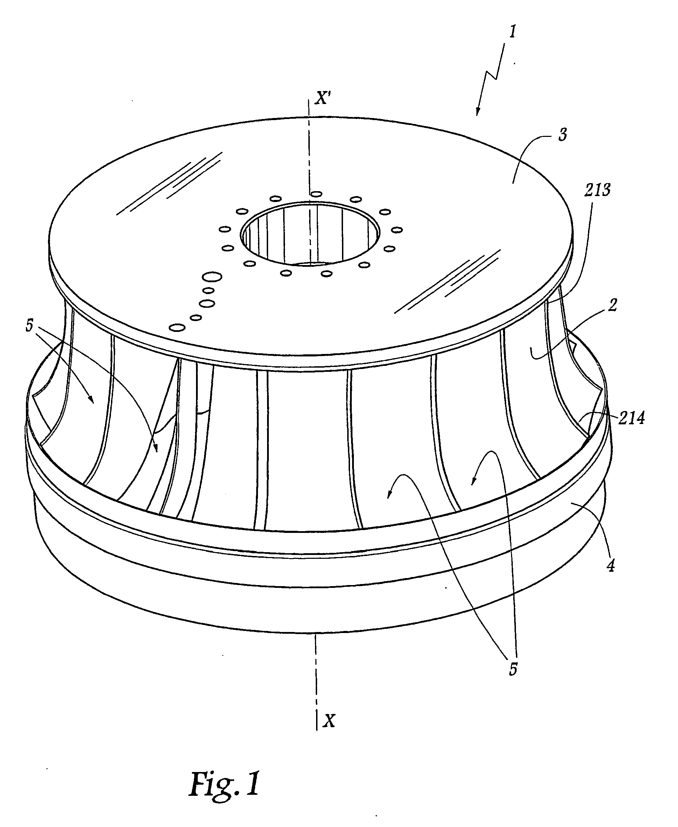

La roue 1 représentée aux figures 1 à 5 comprend des aubes 2 identiques et réparties autour d'un axe central X-X' de rotation de la roue 1. Un plafond 3 est prévu en partie supérieure et radiale interne de la roue 1, alors qu'une ceinture 4 borde la partie inférieure, radiale et externe des aubes 2. Un conduit d'écoulement 5 est ainsi défini entre chaque paire de deux aubes adjacentes, ce conduit étant bordé par le plafond 3 et la ceinture 4.

On note 21 le bord d'attaque d'une aube 2. On note 22 son bord de fuite. On note 213 le point de jonction entre le bord 21 et le plafond 3. On note 214 le point de jonction entre le bord 21 et la ceinture 4. On note 223 le point de jonction entre le bord 22 et le plafond 3 et 224 le point de jonction entre le bord 22 et la ceinture 4.

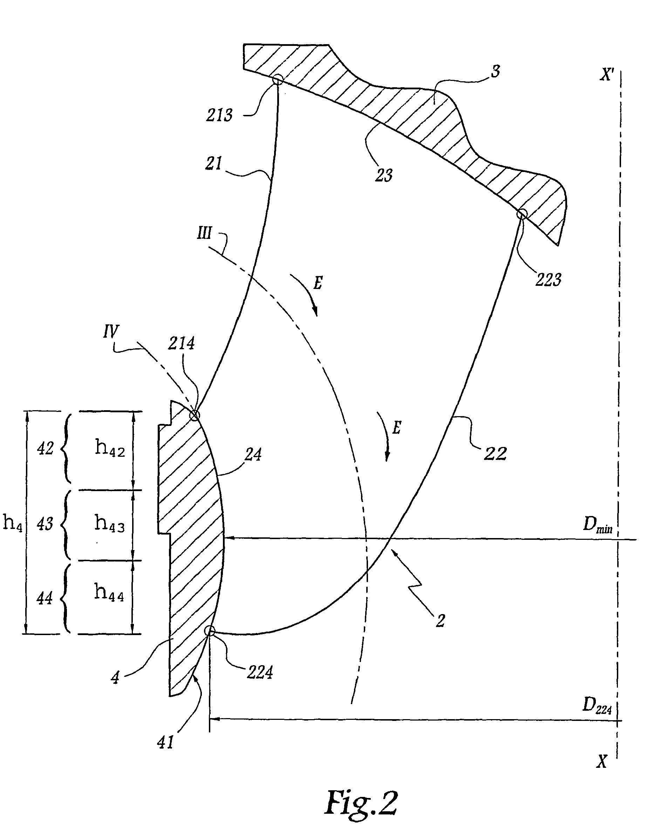

La ligne III à la figure 2 représente la trace méridienne d'une nappe d'écoulement axisymétrique le long de l'aube 2. Les flèches E représentent cet écoulement.

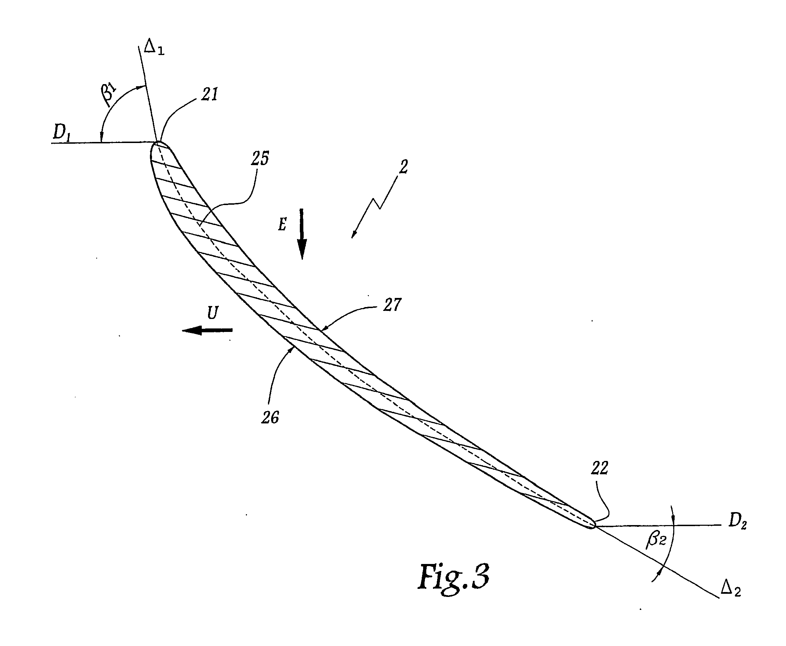

Dans la représentation de la figure 3, l'écoulement E est globalement perpendiculaire à la direction de la vitesse U de progression linéaire de l'aube 2 dont la valeur est égale au nombre de tours par minute effectués par la roue 1 multiplié par π et par le diamètre nominal de la roue.

On note 23 la surface de jonction entre l'aube 2 et le plafond 3, cette surface incluant les points 213 et 223. On note, par ailleurs, 24 la surface de jonction entre l'aube 2 et la ceinture 4, cette surface incluant les points 214 et 224.

On note 25 une surface courbe imaginaire correspondant à la médiane de l'aube 2, c'est-à-dire à une surface située à égale distance des faces latérales 26 et 27 de l'aube 2. La trace de la surface 25 dans le plan de la figure 3 est une courbe équidistante des faces latérales 26 et 27.

On note Δ₁ une droite passant par le bord d'attaque 21 et prolongeant la médiane 25 dans le plan de la figure 3. On note β₁ l'angle entre cette droite Δ₁ et une droite D₁ parallèle à la vitesse U et passant par le bord d'attaque 21.

De la même façon on note Δ₂ une droite prolongeant la médiane 25 au niveau du bord de fuite 22 de l'aube 2 et D₂ une droite parallèle à la vitesse U au niveau de ce bord de fuite. On note β₂ l'angle entre les droites Δ₂ et D₂.

On comprend que compte tenu du caractère essentiellement gauche des aubes 2, les valeurs des angles β₁ et β₂ sont variables sur la longueur des bords d'attaque 21 et de fuite 22.

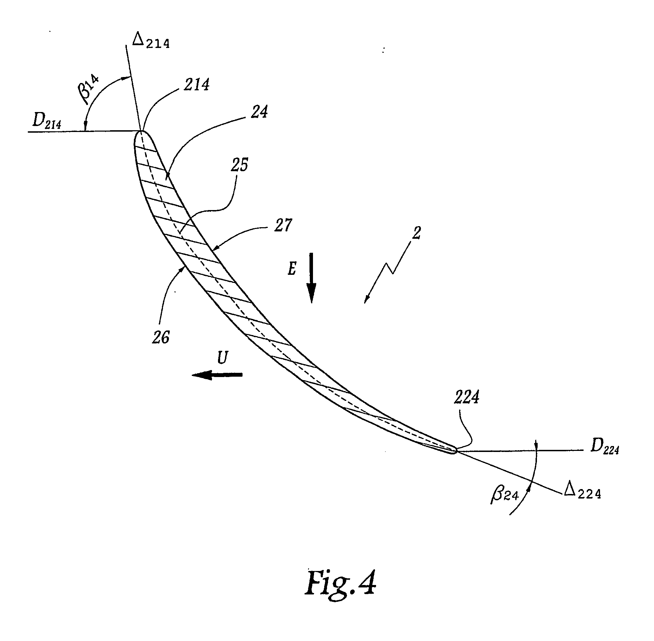

Comme il ressort plus particulièrement de la figure 4, la valeur de l'angle β₂₄ correspondant à l'angle β₂ au niveau du point 224 est comprise entre 20 et 25°, en pratique égale à 21° dans l'exemple représenté. L'angle β₂₄ est l'angle entre une droite Δ₂₂₄ prolongeant la médiane 25 au point 224 et une droite D₂₂₄ parallèle à la vitesse U et passant par ce point.

Un angle β₁₄, correspondant à l'angle β₁ au niveau du point 214, est défini entre une droite D₂₁₄ parallèle à la vitesse U et passant par ce point et une droite Δ₂₁₄ prolongeant la médiane 25 sur ce point. La valeur de cet angle β₁₄ est comprise entre 70 et 120° et, de préférence, de l'ordre de 85° comme représenté sur la figure 4.

En pratique, chaque aube 2 est conçue et réalisée de telle sorte que la valeur maximum de l'angle β₂, sur la longueur du bord de fuite 22 est inférieure à 34°. On peut également définir une valeur moyenne de cet angle β₂ prise sur vingt cinq filets d'écoulement équi-répartis entre le plafond 3 et la ceinture 4. Cette valeur moyenne est de préférence comprise entre 20 et 30°

Grâce à ces valeurs de l'angle β₂, l'écoulement au niveau du bord de fuite 22 peut avoir lieu avec un débit relativement important, sans diminution du rendement de la roue 1.

De la même façon, la valeur moyenne de l'angle β₁ sur la longueur du bord d'attaque 21, prise dans les mêmes conditions, est comprise entre 70 et 120°.

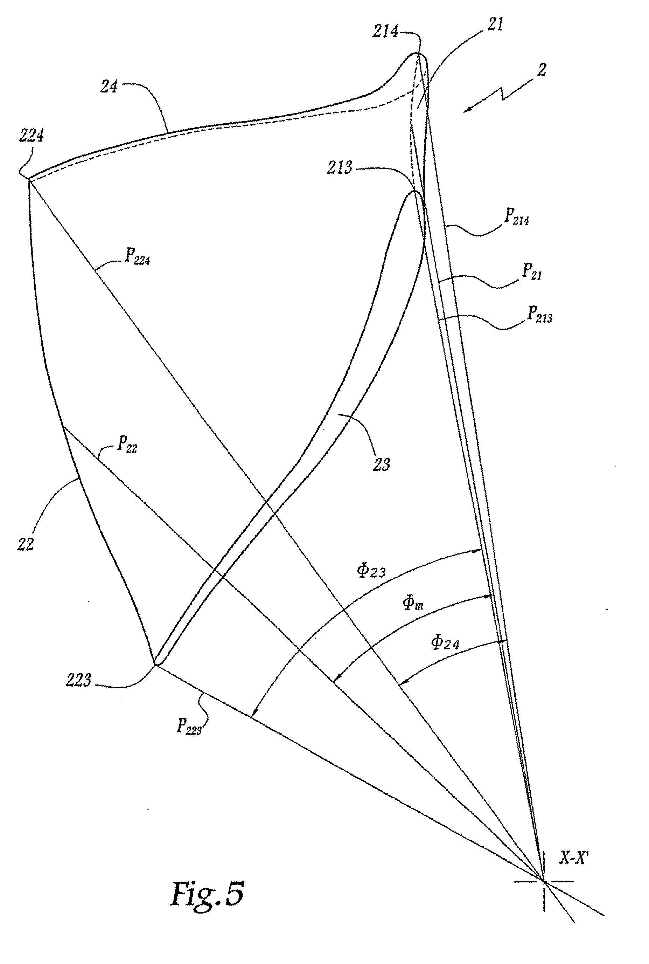

En se reportant à la figure 5, on peut également définir l'angle de recouvrement φ₂₄ de l'aube 2 au niveau de la ceinture 4 comme étant l'angle entre un plan P₂₂₄ passant par l'axe x-x' et par le point 224 et un plan P₂₁₄ passant par l'axe X-X' et par le point 214.

De la même façon, on définit comme angle de recouvrement φ₂₃ de l'aube 2 au niveau du plafond 3 comme étant l'angle entre un plan P₂₂₃ passant par l'axe X-X' et par le point 223 et un plan P₂₁₃ passant par l'axe X-X' et par le point 213.

Pour optimiser l'écoulement de l'eau dans les conduits 5, la valeur de φ₂₄ est choisie inférieure à 25°, alors que la valeur de φ₂₃ est choisie inférieure 37°. En outre, on peut définir une valeur moyenne de l'angle de recouvrement entre les bords d'attaque et de fuite de l'aube 2 sur la longueur de ces bords, en formant la moyenne de 25 valeurs d'angles φ entre des plans P₂₂ passant par l'axe X-X' et des points successifs équi-répartis sur le bord de fuite 22 et des plans P₂₁ passant par l'axe X-X' et des points successifs équi-répartis sur le bord d'attaque 21. En pratique, la valeur moyenne φₘ de cet angle est choisie inférieure à 31°.

Comme il ressort plus particulièrement de la figure 2, on peut diviser la ceinture 4 en trois bandes 42, 43 et 44 dont la hauteur unitaire h₄₂, h₄₃ et h₄₄ est égale à un tiers de la hauteur totale h₄ de la ceinture 4. En considérant la bande intermédiaire 43 de la ceinture 3, on peut définir son diamètre intérieur minimum Dₘᵢₙ qui est en fait le diamètre minimum de la surface 41. On peut également définir le diamètre D₂₂₄ de la surface 41 au niveau du point 224.

En pratique, le rapport de D_{min/}D₂₂₄ est inférieur à 0,98, ce qui correspond au fait que le diamètre minimum est inférieur d'au moins 2% au diamètre D₂₂₄.

## Revendications

1. Roue de type Francis comprenant un plafond, une ceinture et des aubes s'étendant entre ledit plafond et ladite ceinture, lesdites aubes définissant entre elles des conduits d'écoulement de liquide, **caractérisée en ce que** l'angle (β₂₄) entre la vitesse linéaire (U, D₂₂₄) de progression d'une desdites aubes (2) et la médiane (25, Δ₂₂₄) de ladite aube au niveau de son bord de fuite (22) a, au voisinage du point (224) d'attache de ladite aube sur ladite ceinture (4), une valeur comprise entre 20 et 25°.

2. Roue selon la revendications 1, **caractérisée en ce que**, sur la longueur du bord de fuite (22) de ladite aube (2), l'angle (β₂) entre ladite vitesse linéaire (U, D₂) et ladite médiane (25, Δ₂) a une valeur maximale inférieure à 34°.

3. Roue selon l'une des revendications 1 ou 2, **caractérisée en ce que**, sur la longueur du bord de fuite (22) de ladite aube (2), l'angle (β₂) entre ladite vitesse linéaire (U, D₂) et ladite médiane (25, Δ₂) a une valeur moyenne comprise entre 20 et 30°.

4. Roue selon l'une des revendications précédentes, **caractérisée en ce que**, sur la longueur du bord d'attaque (21) de ladite aube (2), l'angle (β₁) entre ladite vitesse linéaire (U, D₁) et ladite médiane (25, Δ₁) a une valeur moyenne comprise entre 70 et 120°.

5. Roue selon l'une des revendications précédentes, **caractérisée en ce que** l'angle (β₁₄) entre ladite vitesse linéaire (U, D₂₁₄) et ladite médiane (25, Δ₂₁₄) a, au voisinage du point (214) d'attache de ladite aube (2) sur ladite ceinture (4), une valeur comprise entre 70 et 120°.

6. Roue selon l'une des revendications précédentes, **caractérisée en ce que** l'angle de recouvrement entre le bord d'attaque (21) et le bord de fuite (22) de ladite aube (2) a, en vue selon une direction parallèle à l'axe (X-X') de rotation de la roue (1) :
- au niveau de la ceinture (4), une valeur (φ₂₄) inférieure à 25° ;
- au niveau du plafond (3), une valeur (φ₂₃) inférieure à 37° et
- en moyenne, sur la longueur desdits bords d'attaque et de fuite, une valeur (φₘ) inférieure à 31°.

7. Roue selon l'une des revendications précédentes, **caractérisée en ce que** ladite ceinture (4) a une section méridienne telle que son diamètre minimal (Dₘᵢₙ) sur le tiers central (43) de sa hauteur (h₄) est inférieur d'au moins 2% par rapport au diamètre (D₂₂₄) de ladite ceinture au niveau des points d'attache (224) des bords de fuite (22) desdites aubes (2) sur ladite ceinture.

8. Machine hydraulique de type Francis équipée d'une roue (1) selon l'une des revendications précédentes.

9. Machine selon la revendication 8, **caractérisée en ce qu'**elle comprend une turbine délivrant une puissance équivalente sous forte charge (P_{11FC}) qui correspond à la puissance de la turbine en un point de fonctionnement (B) ou le rendement est inférieur de 3,5% au rendement au point (A) de fonctionnement optimal, sous un mètre de chute et avec un diamètre de sortie de roue de un mètre, exprimée en kilowatts, telle que son rapport avec la vitesse de rotation (N₁₁) de ladite turbine dans les mêmes conditions, exprimée en tours par minute, a une valeur comprise entre 0,16 et 0,175.

## Claims

1. A Francis-type wheel comprising a ceiling, a belt and blades extending between said ceiling and said belt, said blades defining between them liquid flow conduits, **characterised in that** the angle (β₂₄) between the linear speed (U, D₂₂₄) of advance of one of said blades (2) and the median (25, Δ₂₂₄) of said blade at the level of its trailing edge (22), in the vicinity of the point (224) at which said blade is attached to said belt (4), has a value of between 20 and 25°.

2. A wheel according to Claim 1, **characterised in that**, over the length of the trailing edge (22) of said blade (2), the angle (β₂) between said linear speed (U, D₂) and said median (25, Δ₂) has a maximum value of less than 34°.

3. A wheel according to one of Claims 1 or 2, **characterised in that**, over the length of the trailing edge (22) of said blade (2), the angle (β₂) between said linear speed (U, D₂) and said median (25, Δ₂) has an average value of between 20 and 30°.

4. A wheel according to one of the preceding claims, **characterised in that**, over the length of the leading edge (21) of said blade (2), the angle (β₁) between said linear speed (U, D₁) and said median (25, Δ₁) has an average value of between 70 and 120°.

5. A wheel according to one of the preceding claims, **characterised in that** the angle (β₁₄) between said linear speed (U, D₂₁₄) and said median (25, Δ₂₁₄), in the vicinity of the point (214) at which said blade (2) is attached to said belt (4), has a value of between 70 and 120°.

6. A wheel according to one of the preceding claims, **characterised in that** the overlap angle between the leading edge (21) and the trailing edge (22) of said blade (2), viewed in a direction parallel to the axis (X-X') of rotation of the wheel (1), has:
- at the level of the belt (4), a value (φ₂₄) of less than 25°;
- at the level of the ceiling (3), a value (φ₂₃) of less than 37° and
- on average, over the length of said leading and trailing edges, a value (φₘ) of less than 31°.

7. A wheel according to one of the preceding claims, **characterised in that** said belt (4) has a meridian section such that its minimum diameter (Dₘᵢₙ) over the central third (43) of its height (h₄) is less by at least 2% than the diameter (D₂₂₄) of said belt at the level of the points (224) at which the trailing edges (22) of said blades (2) are attached to said belt.

8. A hydraulic machine of Francis type equipped with a wheel (1) according to one of the preceding claims.

9. A machine according to Claim 8, **characterised in that** it comprises a turbine delivering an equivalent power under high load (P_{11FC}) which corresponds to the power of the turbine at an operating point (B) at which the yield is less by 3.5% than the yield at the optimum operating point (A), under one metre of head and with a wheel outlet diameter of one metre, expressed in kilowatts, such that its ratio with the speed of rotation (N₁₁) of said turbine under the same conditions, expressed in rotations per minute, has a value of between 0.16 and 0.175.

## Patentansprüche

1. Francis Rad umfassend eine Decke, eine Einfassung und Schaufeln, die sich zwischen der Decke und der Einfassung erstrecken, wobei die Schaufeln zwischen sich Kanäle für die Strömung von Flüssigkeit bilden, **dadurch gekennzeichnet, dass** der Winkel (β₂₄) zwischen der linearen Geschwindigkeit (U, D₂₂₄) des Fortschreitens einer der Schaufeln (2) und der Mittellinie (25, Δ₂₂₄) der Schaufel an ihrem Abströmkante (22) in der Nähe eines Befestigungspunktes (224) der Schaufel an der Einfassung (4) einen Wert zwischen 20 und 25° aufweist.

2. Rad nach Anspruch 1, **dadurch gekennzeichnet, dass** auf der Länge der Abströmkante (22) der Schaufel (2) der Winkel (β₂) zwischen der Lineargeschwindigkeit (U, D₂) und der Mittellinie (25, Δ₂) einen Maximalwert kleiner als 34° aufweist.

3. Rad nach einem der Ansprüche 1 oder 2, **dadurch gekennzeichnet, dass** auf der Länge der Abströmkante (22) der Schaufel (2) der Winkel (β₂) zwischen der Lineargeschwindigkeit (U, D₂) und der Mittellinie (25, Δ₂) einem mittleren Wert zwischen 20 und 30° aufweist.

4. Rad nach einem der vorhergehenden Ansprüche, **dadurch gekennzeichnet, dass** auf der Länge der Anströmkante (21) der Schaufel (2) der Winkel (β₁) zwischen der Lineargeschwindigkeit (U, D₁) und der Mittellinie (25, Δ₁) einen mittleren Wert zwischen 70 und 120° aufweist.

5. Rad nach einem der vorhergehenden Ansprüche, **dadurch gekennzeichnet, dass** der Winkel (β₁₄) zwischen der Lineargeschwindigkeit (U, D₂₁₄) und der Mittellinie (25, Δ₂₁₄) in der Nähe des Befestigungspunktes (214) der Schaufel (2) an der Einfassung (4) einen Wert zwischen 70 und 120° aufweist.

6. Rad nach einem der vorhergehenden Ansprüche, **dadurch gekennzeichnet, dass** der Überdeckungswinkel zwischen der Anströmkante (21) und der Abströmkante (22) der Schaufel (2) in Hinsicht entsprechend einer Richtung parallel zur Rotationsachse (X-X') des Rades (1)
- an der Einfassung (4) einen Wert (∅₂₄) kleiner als 25°,
- an der Decke (3) einen Wert (∅₂₃) kleiner als 37° und
- über die Länge der Anström- und Abströmkanten im Mittel einen Wert (∅ₘ) kleiner als 31°
aufweist.

7. Rad nach einem der vorhergehenden Ansprüche, **dadurch gekennzeichnet, dass** die Einfassung (4) einen Meridianschnitt derart aufweist, dass ihr Minimaldurchmesser (Dₘᵢₙ) auf dem mittleren Drittel (43) ihrer Höhe (h₄) um mindestens 2% in Bezug auf den Durchmesser (D₂₂₄) der Einfassung an den Befestigungspunkten (224) der Abströmkanten (22) der Schaufeln (2) an der Einfassung kleiner ist.

8. Hydraulische Francis Maschine ausgerüstet mit einem Rad (1) nach einem der vorhergehenden Ansprüche.

9. Maschine nach Anspruch 8, **dadurch gekennzeichnet, dass** sie eine Turbine umfasst, die eine äquivalente Leistung bei starker Last (P_{11FC}) liefert, die der Leistung der Turbine bei einem Arbeitspunkt (B) entspricht, bei dem der Wirkungsgrad um 3,5% kleiner ist als der Wirkungsgrad bei optimalem Arbeitspunkt (A), bei einem Meter Fall und mit einem Radaustrittsdurchmesser von einem Meter, ausgedrückt in Kilowatt, derart dass ihr Verhältnis mit der Rotationsgeschwindigkeit (N₁₁) der Turbine bei den gleichen Bedingungen, ausgedrückt in Umdrehungen pro Minute, einen Wert zwischen 0,16 und 0,175 aufweist.
